(19) **Europäisches Patentamt**
**European Patent Office**
**Office européen des brevets**

(11) **EP 2 242 221 A1**

(12) **EUROPEAN PATENT APPLICATION**

(43) Date of publication:
**20.10.2010 Bulletin 2010/42**

(51) Int Cl.:
**H04L 12/58** *(2006.01)*

(21) Application number: **10170938.4**

(22) Date of filing: **13.04.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR** | (72) Inventor: **Kamat, Harshad N.**<br>**Washington, WA 98038 (US)** |
| (62) Document number(s) of the earlier application(s) in accordance with Art. 76 EPC:<br>**07755380.8 / 2 149 232** | (74) Representative: **Phillips, Emily Elizabeth et al**<br>**Kilburn & Strode LLP**<br>**20 Red Lion Street**<br>**London WC1R 4PJ (GB)** |
| (71) Applicant: **Teamon Systems Inc.**<br>**Issaquah, WA 98027 (US)** | Remarks:<br>This application was filed on 27-07-2010 as a divisional application to the application mentioned under INID code 62. |

(54) **Email system including email aggregation server providing staggered initial fallback polling and related methods**

(57)    An email system may include at least one subscribed mailbox server having a plurality of subscribed mailboxes and sending a new mail indication upon receiving a new email message, and a plurality of mobile wireless communications devices. The system may further include at least one email aggregation server for polling each subscribed mailbox for email messages based upon receiving a respective new email indication therefrom, and forwarding the email messages to respective mobile wireless communications devices. The at least one email aggregation server may perform a fallback polling of each subscribed mailbox based upon not having polled the subscribed mailbox for a threshold fallback time, and stagger respective initial fallback polling times of the subscribed mailboxes upon start-up.

FIG. 6

EP 2 242 221 A1

**Description**

**Field of the Invention**

The present invention relates to the field of communications systems, and, more particularly, to electronic mail (email) communications systems and related methods.

**Background of the Invention**

Electronic mailboxes reside on electronic mail (email) servers and are used to store email messages. Electronic mailboxes are connected to the Internet to enable users to send and receive incoming and outgoing email messages. These mailboxes may also be extended to deliver email to mobile wireless communication devices via wireless networks. In the case of a corporation, electronic mailboxes are typically located on email servers at the corporation. On the other hand, mailboxes for small businesses or individuals are typically located on Internet service provider (ISP) email servers.

Mail user agents (MUAs) are applications which use a technique called polling to relay messages from the email server to the mail program at a user's computer or mobile wireless communications device. A MUA is a program running either on a user's personal computing device (mobile or stationary), or on a shared email relay server that checks for new mail on behalf of a multitude of such users. More particularly, polling is the retrieval of incoming messages from other users at the mail server and delivery of these messages to the user's mailbox.

One particularly advantageous email retrieval system is disclosed in U.S. Patent Pub. No. 2006/0293032 to Clarke et al., which is assigned to the present Assignee. This system includes at least one wireless communications device and at least one email server for storing email messages for the at least one wireless communications device. The system further includes an email relay server for detecting a new email message on the at least one email server and, based thereon, sending a short message service (SMS) notification with a unique message identifier (ID) of the new email message to the at least one wireless communications device. Moreover, the at least one wireless communications device detects the SMS notification and sends an email retrieval request to the email relay server instructing the email relay server to retrieve the new email message based upon the unique message ID.

One potential difficulty in detecting new email messages on email servers is that as the number of system users grows, so too does the number of mailboxes that the MUA will have to poll for email messages. As such, it may be desirable in certain applications to provide efficient approaches for scheduling polling operations to reduce over-utilization and/or under-utilization of polling resources at any given time.

**Brief Description of the Drawings**

FIG. 1 is a schematic block diagram of an email system in accordance with one embodiment providing distributed polling of mailboxes.

FIG. 2 is a schematic block diagram of an alternative embodiment of the system of FIG. 1 providing polling of unsubscribed and subscribed emails servers.

FIGS. 3 and 4 are flow diagrams illustrating related method aspects for the system of FIG. 1.

FIG. 5 is a timeline graph illustrating distributed polling operations of the system of FIG. 1.

FIG. 6 is a schematic block diagram of another email system providing fallback polling.

FIGS. 7 and 8 are flow diagrams illustrating related method aspects for the system of FIG. 6.

FIG. 9 is a timeline graph illustrating fallback polling operations of the system of FIG. 6.

FIG. 10 is a schematic block diagram of still another email system providing time staggering of time overlapped polling operations.

FIGS. 11 and 12 are flow diagrams illustrating related method aspects for the system of FIG. 10.

FIG. 13 is a timeline graph illustrating time staggering operations of the system of FIG. 10.

FIG. 14 is a schematic block diagram of yet another email system providing time compacting of time gapped polling operations.

FIGS. 15 and 16 are flow diagrams illustrating related method aspects for the system of FIG. 14.

FIG. 17 is a timeline graph illustrating time compacting operations of the system of FIG. 14.

FIG. 18 is a schematic block diagram illustrating exemplary components of a mobile wireless communications device for use with an exemplary embodiment.

**Detailed Description of the Preferred Embodiments**

The present description is made with reference to the accompanying drawings, in which preferred embodiments are shown. However, many different embodiments may be used, and thus the description should not be construed as limited to the embodiments set forth herein. Rather; these embodiments are provided so that this disclosure will be thorough and complete. Like numbers refer to like elements throughout, and prime notation is used to indicate similar elements or steps in different embodiments.

Generally speaking, an email system is disclosed herein which may include at least one subscribed mailbox server having a plurality of subscribed mailboxes and sending a new mail indication upon receiving a new email message, and a plurality of mobile wireless communications devices. The system may further include at least one email aggregation server for polling each subscribed mailbox for email messages based upon receiving a respective new email indication therefrom, and forwarding the email messages to respective mobile wireless communications devices. Furthermore, the at least one email aggregation server may perform a fallback polling of each subscribed mailbox based upon not having polled the subscribed mailbox for a threshold fallback time, and stagger respective initial fallback polling times of the subscribed mailboxes upon start-up.

More particularly, the at least one email aggregation server may perform an initial polling of each subscribed mailbox upon start-up. Also, the at least one email aggregation server may stagger respective initial fallback polling times of the subscribed mailboxes upon start-up to have a uniform distribution. The at least one email aggregation server may also stagger respective initial fallback polling times of distributed groups of the subscribed mailboxes upon start-up. In addition, each mailbox may have a unique identifier (UID) associated therewith. As such, the at least one email aggregation server may stagger respective initial fallback polling times of the subscribed mailboxes upon start-up based upon the UIDs.

The at least one email aggregation server may perform a first type polling unless a threshold time has elapsed since a last second type polling, and the second type polling may be more comprehensive than the first type polling. More specifically, the first type polling may comprise an abbreviated polling for new emails, and the second type polling may comprise a reconciliation polling of all emails.

The email system may further include at least one unsubscribed mailbox server not sending a new mail indication upon receiving a new email message, and the at least one email aggregation server may poll the at least one unsubscribed mailbox server periodically. The threshold fallback time may have a duration in a range of 3 to 10 hours, for example. Additionally, at least some of the mobile wireless communications devices may comprise cellular communications devices.

An electronic mail (email) aggregation server is for polling a plurality of subscribed mailboxes on at least one subscribed email server for email messages, where the at least one subscribed email server sends a new mail indication upon receiving a new email message. The email aggregation server may include an aggregation module for polling each of a plurality of subscribed mailboxes for email messages based upon receiving a respective new email indication from the at least one email server, forwarding the email messages to respective mobile wireless communications devices, and performing a fallback polling of each subscribed mailbox based upon not having polled the subscribed mailbox for a threshold fallback time. The email aggregation server may further include a scheduling module for staggering respective initial fallback polling times of the subscribed mailboxes upon start-up.

An electronic mail (email) aggregation method aspect for aggregating email messages from a plurality of subscribed mailboxes on at least one subscribed mailbox server, where the at least one subscribed mailbox server sends a new mail indication upon receiving a new email message, is also provided. The method may include polling each of a plurality of subscribed mailboxes for email messages based upon receiving a respective new email indication from the at least one email server, and forwarding the email messages to respective mobile wireless communications devices. The method may further include performing a fallback polling of each subscribed mailbox based upon not having polled the subscribed mailbox for a threshold fallback time, and staggering respective initial fallback polling times of the subscribed mailboxes upon start-up.

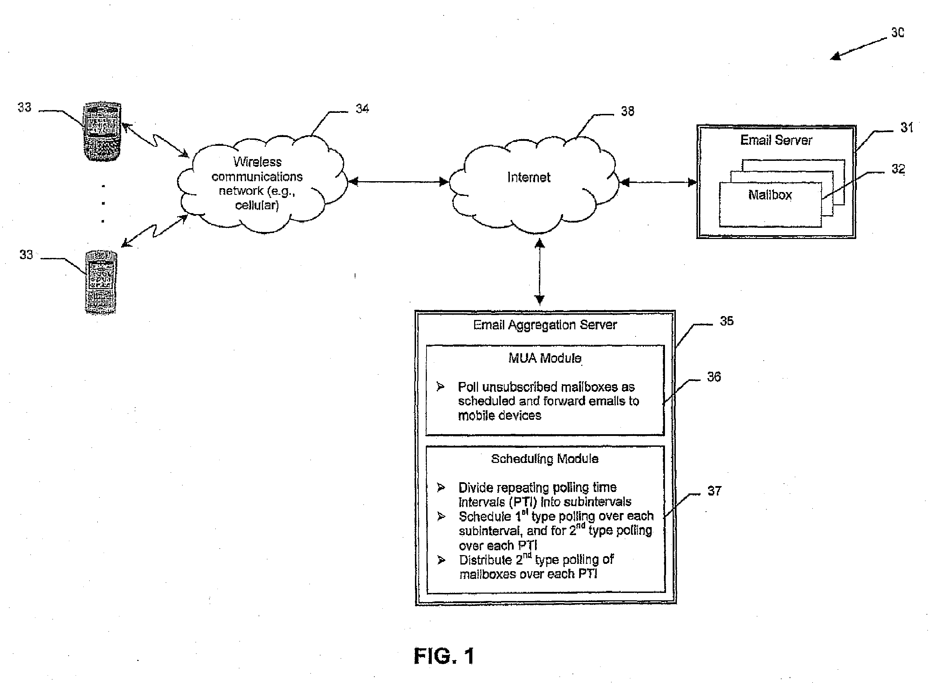

Referring initially to FIG. 1, an email system 30 illustratively includes at least one email server 31 having mailboxes 32 for storing email messages therein, as will be appreciated by those skilled in the art. By way of example, the email server(s) 31 may be corporate email servers, email servers hosted by ISPs, etc. The system 30 also illustratively includes a plurality of mobile wireless communications devices 33. By way of example, the devices 33 may be cellular devices that are capable of sending and receiving emails via a wireless (i.e., cellular) communications network 34. However, other types of wireless devices (and networks), such as wireless local area network (WLAN) devices, may also.be used in some embodiments. Moreover, in some embodiments the devices 33 may be enabled for communicating via more than one type of wireless network (e.g., via a cellular network and a WLAN).

The system 30 further illustratively includes one or more email aggregation servers 35 comprising a mail user agent (MUA) module 36 for polling the mailboxes 32 for email messages and forwarding the email messages to respective mobile wireless communications devices 33. The email aggregation server 35 may also be referred to as an email relay server or email proxy server in some applications. More particularly, a given user of a device 33 will typically have one or more email accounts with one or more email service providers hosting the email server(s) 31. The user registers the various accounts with the provider of the email aggregation server 35, and with the registration information provided (e.g., email address, login information, etc.,), the email aggregation server 35 is able to poll the mailboxes and retrieve emails therefrom to forward to the mobile devices **33,** as will be appreciated by those skilled in the art.

The MUA module **36** may also perform other tasks, such as synchronizing or deleting emails in the mailboxes **32,** changing attributes of emails (e.g., from unread to read), etc. The email aggregation server **35** further illustratively includes a scheduling module **37** for scheduling polling operations, as will be discussed further below. As will be appreciated by those skilled in the art, the MUA module and **36** and scheduling module **37** may be implemented using a combination of hardware (e.g., processor, memory, etc.) and software components. The email aggregation server **35** communicates with the wireless communications network(s) **34** and email server(s) **31** via a wide area network, such as the World Wide Web/Internet **38** in the illustrated example.

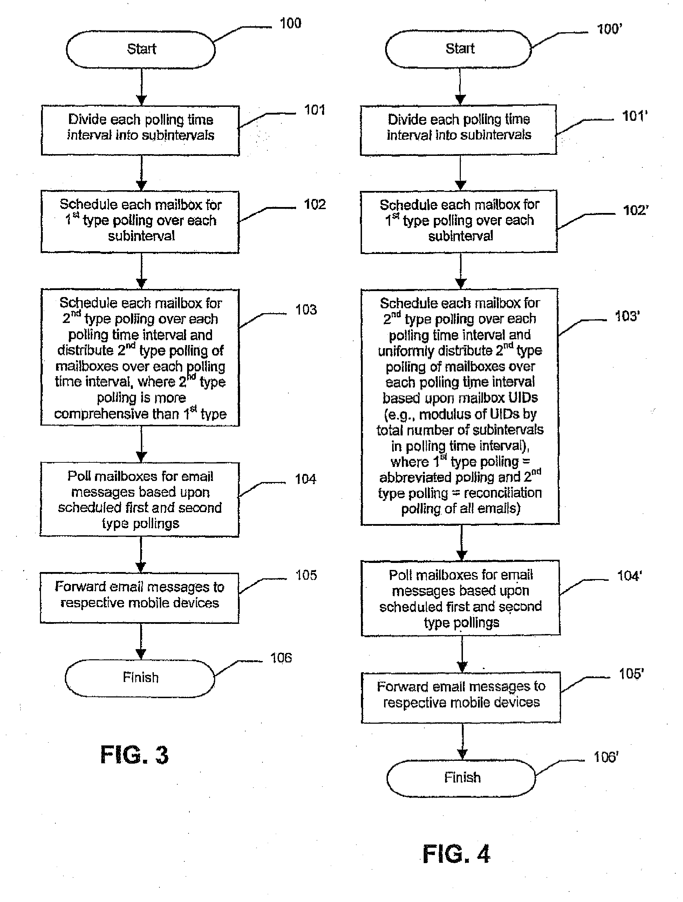

Referring more particularly to FIGS. 3-5, in an exemplary polling approach beginning at Block **100,** the scheduling module **37** divides each of a plurality of repeating polling time intervals into a plurality of subintervals, at Block **101,** and schedules each mailbox **32** for at least a first type polling over each subinterval and for a second type polling over each polling time interval, at Blocks **102-103.** By way of example, each polling time interval may have a duration in a range of 30 minutes to 180 minutes, and each subinterval may have a duration in a range of 5 to 60 minutes. The mailboxes **32** are polled as scheduled, at Block **104,** and retrieved messages are forwarded to respective mobile wireless communications devices **33,** at Block **105,** thus concluding the illustrated method (Block **106**). While shown as concluding at Block **106** for clarity of illustration, it will be appreciated that the above-described polling operation is repeated during operation.

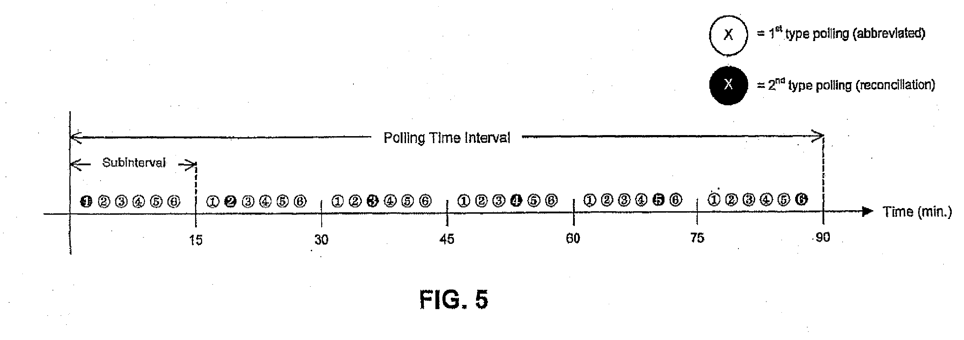

In the example illustrated in FIG. 5, there are six mailboxes ((1)-(6)), the repeating polling time interval is 90 minutes, and the polling time interval is divided into six subintervals of 15 minutes each. Thus, each mailbox **32** is scheduled for a first type polling (indicated by a black number on a white circular background) once every fifteen minutes, and a second type polling (indicated by a white number on a black circular background) once every ninety minutes.

More particularly, the second type polling is more comprehensive than the first type polling. By way of example, the first type polling is preferably a "quick" or abbreviated polling for new emails only. This may be done, for example, by assuming that the email server **31** arranges emails in the mailboxes **32** in chronological order of receipt. As such, the MUA module **36** stores time/date information for the most recent email in a given mailbox **32** located during the last polling. When performing an abbreviated polling, the MUA module **36** then checks the time/date information of the first email in the mailbox **32** (which is assumed to be the most recent email) and continues to work through the emails in order until the email is found that matches the stored time/date information. This indicates to the MUA module **36** that it has found the end of the new email messages, as will be appreciated by those skilled in the art.

On the other hand, the second type polling is preferably a "full" or reconciliation polling of all emails in a given mailbox **32.** That is, rather then only checking the latest emails in a given mailbox **32,** the MUA module **36** instead compares each of the email messages in the mailbox to a list or index of emails stored by the MUA module created during a last reconciliation polling (and updated through subsequent abbreviated pollings). It is desirable to perform a reconciliation polling because emails are on occasion not stored in chronological order in a given mailbox **32,** and thus new email messages can be missed by abbreviated polls. Moreover, this allows the MUA module **36** to determine when emails have been read, deleted, etc., so that corresponding reconciliation operations can be performed, as will be appreciated by those skilled in the art. Yet, a full reconciliation polling requires a significant amount of processing time, both by the MUA module **36** and the email sever **31.** This is why abbreviated polls are preferably performed at relatively short intervals to provide quick retrievals of new emails, and reconciliation polls are still performed but less often (e.g., once during the polling time interval).

In the example illustrated in FIG. 5, the scheduling module **37** uniformly distributes the second type polling (i.e., reconciliation polling) of the mailboxes **32** over each repeating polling time interval (Block **103'**). More particularly, the scheduling module **37** does this by uniformly distributing the reconciliation polling of the mailboxes **32** among the subintervals. Thus, with six subintervals in each polling time interval, in the present example the scheduling module **37** schedules one-sixth of the mailboxes for a reconciliation polling during each of the subintervals. In the illustrated example with six mailboxes, this means that mailbox (1) receives a reconciliation polling during the first subinterval between 0 and 15 min., the second mailbox (2) receives a reconciliation polling in the second subinterval between 15 and 30 minutes, etc.

It should also be noted that in the illustrated example the reconciliation polling replaces the otherwise scheduled abbreviated polling during the particular subinterval when the reconciliation polling is scheduled. However, this need not be the case in all embodiments, as an abbreviated and reconciliation polling could still be performed for the same mailbox **32** in a given subinterval, if desired. Also, it should be further noted that the polling time interval and subinterval values provided above are given by way of example, and that other values may also be used in different embodiments.

One way in which the scheduling module **37** may perform the uniform distribution is based upon a unique identifier (UID) associated with each mailbox **32.** More particularly, the email server **35** may assign or store (e.g., the UID could be assigned by the email server **31**) a UID for each mailbox **32,** and the distribution may be based upon the UID. For example, numerically and/or alphabetically lower UID numbers could be assigned to earlier subintervals in the polling time interval, and the greater UIDs assigned to later subintervals. An example where the scheduling module **37** distributes polling of the mailboxes among the subintervals based upon a modulus of the UIDs by a total number of the polling time subintervals will be discussed further below.

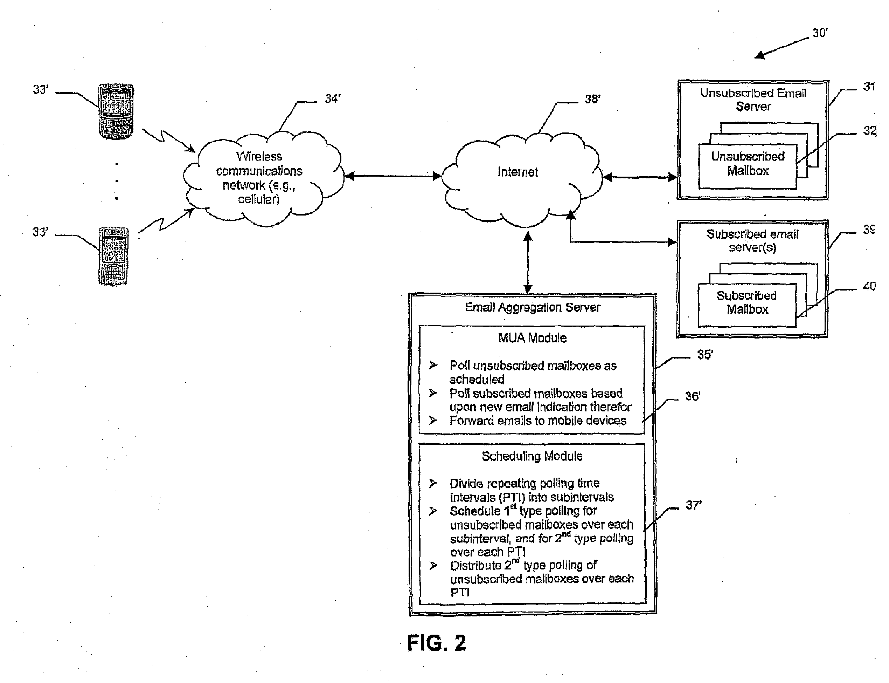

Referring now additionally to FIG. 2, the above-described scheduling and polling approach is particularly advantageous for unsubscribed email servers. That is, an unsubscribed email server does not send new email indications or notifications to the email aggregation server **35'** upon receiving new email messages. Rather, the email aggregation server **35'** has to discover new email messages on its own using the above-described polling operations, for example. However, in some applications a subscribed email server(s) **39'** having subscribed mailboxes **40'** may advantageously send a notification to the email aggregation server **35'** when a new email message arrives for a given mailbox.

In this way, for subscribed mailboxes **40'** the email aggregation server **35'** need not perform scheduled abbreviated polling to discover new email messages, since it will be notified when new emails are available by the subscribed email server **39'** (although abbreviated polling could still be used, if desired). Instead, the MUA module **36'** polls a subscribed mailbox **40'** based upon receiving a new email indication therefor (i.e., it waits to receive a new email indication before polling). Here again, it may be desirable to balance the type of polling used for a subscribed mailbox **40'** (i.e., first or second type polling) to not unduly burden server resources, yet at the same time keep a fairly up-to-date record of all of the emails in a given subscribed mailbox **40'**. As such, the MUA module **36'** may advantageously wait to poll for email messages for a given subscribed mailbox **40'** until an email notification is received, and responsive thereto use an abbreviated poll if it has been less than the polling time interval (e.g., 90 minutes) since a last reconciliation poll, otherwise a reconciliation poll is performed. However, other configurations are also possible.

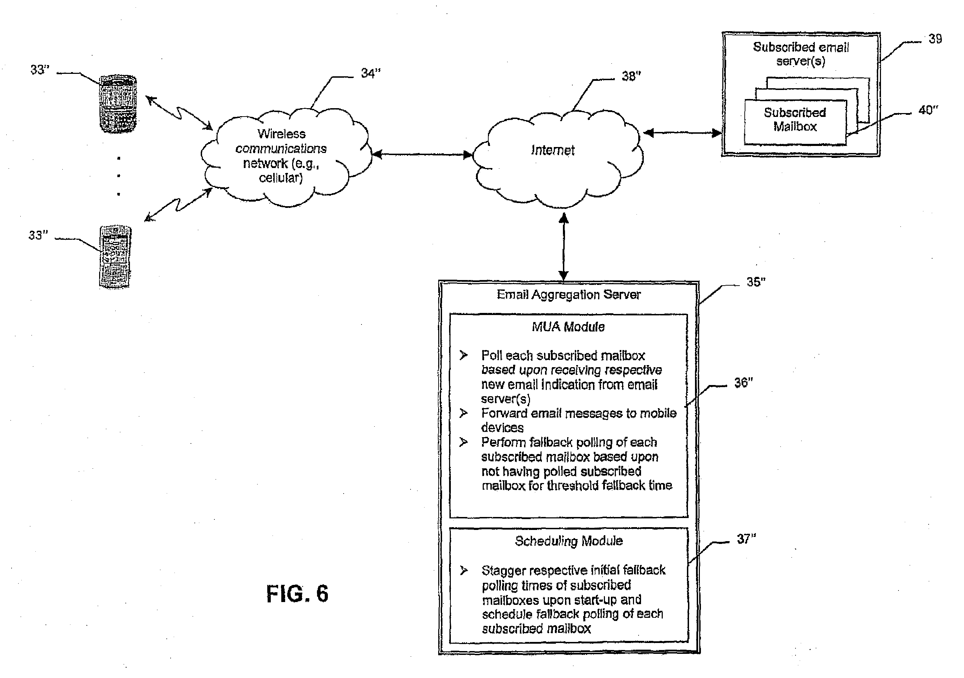

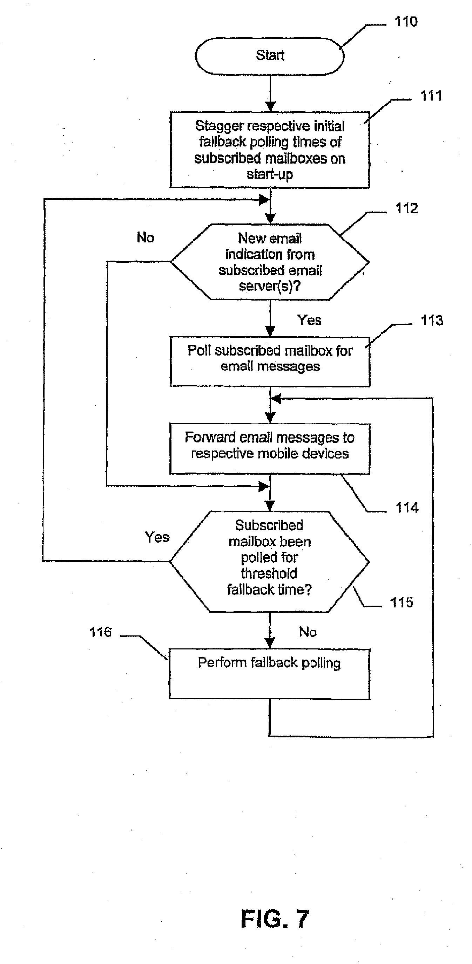

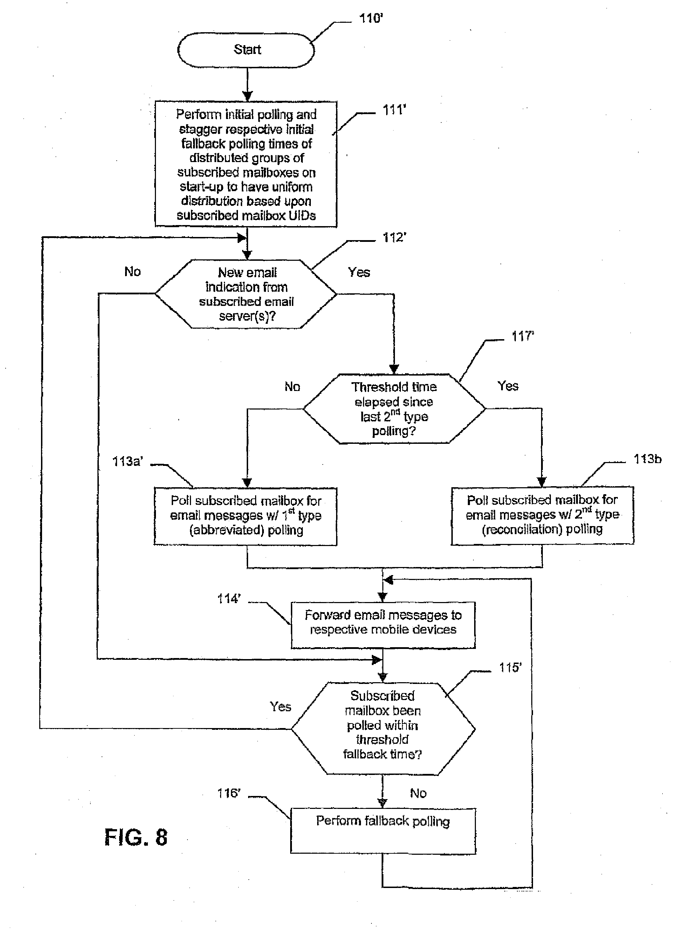

Referring now additionally to FIGS. 6-9, despite obtaining notifications from a subscribed email server **39"** of new email messages, there may be long periods when no notification is received from the subscribed email server for one or more subscribed mailboxes **40"**. This could occur for several reasons, one of which is that the given subscribed mailbox **40"** has received no new emails. Yet, this could also be because the subscribed email server **39"** is not properly sending notifications for some reason. As such, it may be desirable in some embodiments to also perform a fallback polling of each subscribed mailbox **40"** if the mailbox has not been polled for a threshold fallback time. That is, if no notification of new emails has been received by the email aggregation server **35"** within the threshold fallback time for a given mailbox **40"**, then a fallback polling of the mailbox is performed.

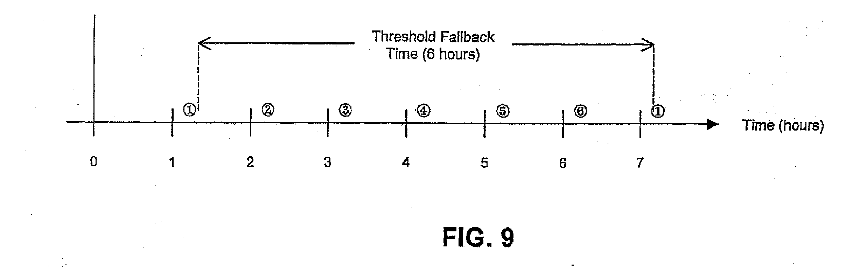

By way of example, in the illustrated example of FIG. 9 the threshold fallback time is 6 hours, but other threshold fallback times may also be used. One potential problem that can occur with fallback polling operations occurs at start-up of the email aggregation server **35"** (or components thereof). In particular, upon start-up the scheduling module **37"** would ordinarily set all of the threshold fallback times for each mailbox to 6 hours from the start-up time (i.e., the 6-hour mark in FIG. 9). Yet, if no notification was received for many of the subscribed mailboxes **40"** within the six hour period, this would otherwise mean that numerous fallback polling operations would all come due at the same time. Using the above-described rule that a reconciliation poll is performed if there has been no reconciliation poll within the prior polling time interval (e.g., 90 minutes), then this means that numerous reconciliation polls would all come due substantially simultaneously, leading to an undesirably large processing load.

Beginning at Block **110,** upon start-up the scheduling module **37"** advantageously staggers respective initial fallback polling times of the subscribed mailboxes **40",** at Block **111.** In some embodiments, it may also be desirable to perform an initial polling of each subscribed mailbox **40"** upon start-up (Block **111'**), which could include first and/or second type pollings, since the email aggregation server **35"** may have been offline for a significant amount of time. Here again, the distribution of the fallback polling times may be uniform, and it may be done in groups. In the example of FIG. 9 where there are six subscribed mailboxes ((1)-(6)), one-sixth of the mailboxes (which equals one mailbox in this example) are polled every hour beginning one hour after start-up. Moreover, the distribution may be determined based upon UIDs of the subscribed mailboxes **40",** as similarly described above. Further details on staggering the fallback polling times upon start-up will be discussed below.

When a new email indication is received from the subscribed email server **39",** at Block **112,** the MUA module **36"** polls the appropriate mailboxes **40"** (Block **113**) using either an abbreviated poll or a reconciliation poll, as discussed further above (Blocks **117, 113a', 113b'**), and forwards emails to respective mobile wireless communications devices **33"** accordingly, at Block **114.** As also discussed above, if a subscribed mailbox **40"** has not been polled for the threshold fallback time (i.e., it has not received a notification of new email during this time), then a scheduled fallback polling is performed, at Blocks **115-116,** and the fallback polling period is reset (i.e., the next fallback polling is scheduled a duration equal to the threshold fallback time from a current time).

The above-described polling and scheduling operations will be further understood with reference to an exemplary implementation thereof. As mentioned above, if no effort is made to distribute unsubscribed and subscribed mailbox polling and they become due for reconciliation polls and/or fallback polls at about the same time, then the email aggregation server **35'** sees much more load during these times than usual. For ease of reference, a glossary of terms used in the following example is as follows:

• srcMboxId is the unique identifier of a mailbox;

- lastPollTime is the last time at which a mailbox was polled;
- nextPollTime is the next time at which a mailbox will be due for polling; and
- lastFullPollTime is the last time at which a mailbox was full polled.

A mailbox becomes due for polling when its nextPollTime is ≤ Now (where Now is the current system time), at which time the scheduling module **37'** submits it for polling, sets its lastPollTime to Now and schedules it for polling again by calculating its nextPollTime. If it has been 90 minutes or greater since the source has been full polled, as indicated by the lastFullPollTime, then a reconciliation poll is initiated. Otherwise, an abbreviated poll is initiated for the mailbox.

It is assumed that, on average, all unsubscribed mailboxes **32'** should be polled at least once every 15 minutes. On the other hand, subscribed mailboxes **40'** are polled when the email aggregation server **35'** receives a notification of new mail in a given subscribed mailbox. Subscribed mailboxes **40'** also have a fallback poll scheduled 6 hours after the last new mail notification received by the email aggregation server **35'.** Each mailbox (subscribed and unsubscribed) is due for a reconciliation poll once every 90 minutes, although subscribed mailboxes may go longer than 90 minutes without being polled if no notification has been received. Assuming a polling time interval of 90 minutes and a fallback poll duration of 6 hours, all fallback polls by default will be reconciliation polls. As noted above, all of these values are configurable.

Since reconciliation polling is relatively processing intensive, if an attempt is not made to organize the polling of mailboxes such that they become due for reconciliation polls at different times, many or all unsubscribed mailboxes **32'** will become due for a full reconciliation poll in the same polling interval (e.g., 15 minutes) thereby burdening the email aggregation server **35'** during that period.

Accordingly, at system start-up when the bulk of the unsubscribed mailboxes **32'** would otherwise be added by the scheduling module **37'** for polling, the mailboxes are organized in such a way that they do not all become due for a reconciliation poll in the same 15 minute interval by spreading the full polls over a 90 minute period, i.e., the polling time interval. This is done by first calculating how many subintervals there are in the polling time interval, and then uniformly distributing all mailboxes to be full reconciliation polled (i.e., the unsubscribed mailboxes **32'**) into these subintervals. This will ensure that the MUA module **36'** is not burdened at start-up and subsequently when the mailboxes become due for full reconciliation polling again.

Since the srcMboxIds are unique within each email aggregation server **35'** and/or MUA module **36',** a modulus of the srcMboxId by the subintervals, which will yield a uniform distribution over the intervals, is taken to assign each mailbox to one of the subintervals. For example, since each unsubscribed mailbox **32'** has to be reconciliation polled once every 90 minutes, there will be 6 intervals of 15 minutes each in which to do it, as shown in FIG. 5. Each mailbox is then assigned a lastFullPollTime such that they become due for a full poll sometime over the next 90 minutes, that is:

$$\texttt{lastFullPollTime = Now - 15 * X,}$$

where X = (srcMboxId mod 6) + 1.
So, if
X=1, lastFullPollTime = (Now - (15 * 1)) = (Now - 15)
X=2, lastFullPollTime = (Now - (15 * 2)) = (Now - 30)
X=3, lastFullPollTime = (Now - (15 * 3)) = (Now - 45)
X=4, lastFullPollTime = (Now - (15 * 4)) = (Now - 60)
X=5, lastFullPollTime = (Now - (15 * 5)) = (Now - 75)
X=6, lastFullPollTime = (Now - (15 * 6)) = (Now - 90).

Therefore, mailboxes that are given a lastFullPollTime of (Now - 90) will become due for a full reconciliation poll in the first 15 minutes, and those with (Now - 15) will become due for a full reconciliation poll in the last 15 minutes of a 90 minute interval with the others in between. In this way, by assigning lastFullPollTimes at start-up, the scheduling module **37'** will cause reconciliation polls to be initiated for all of the mailboxes in 90 minutes by initiating reconciliation polls for only 1/6th of the sources every 15 minutes.

Similar to the reconciliation polls, when subscribed mailboxes **40'** are added to the scheduling module **37'** at system start-up, the fallback polling times are spread or staggered as noted above such that all subscribed mailboxes do not become due for fallback polling all at once. For example, with a fallback poll time of 6 hours and polling time interval of 90 minutes, all subscribed mailboxes **40'** would otherwise become due for a full poll in 6 hours after start-up if they had received no notifications during this time. If no attempt is made to stagger their nextPollTimes then they all will become due for a full poll in the same 15 minute interval. Assuming, for example, that approximately 50% of the total mailboxes to be polled by the MUA module **36'** are subscribed mailboxes **40',** the MUA module **36'** would then be required to perform twice the number of polls in a 15 minute subinterval than it does in other 15 minute subintervals.

Since the nextPollTime for subscribed mailboxes **40'** will be moved out 6 hours from the last time the MUA module **36'** receives a new mail notification (and since the arrival of new mail in a mailbox is a truly random event), the scheduled fallback pollings of the subscribed mailboxes will eventually be substantially uniformly distributed. However, since restarts following system maintenance normally happen in off-peak hours when most users do not receive any email, if no attempt is made to stagger the nextPollTime of subscribed mailboxes **40'** then they will likely become due for their fallback poll at about the same time, thus burdening the MUA module **36'** until users start receiving new emails.

At system start-up, all mailboxes (subscribed and unsubscribed) are polled once in the first (i.e., 15 minute) polling subinterval, one-sixth of which are reconciliation polls and the rest are abbreviated polls. Subsequently, when it comes to calculating the nextPollTime for subscribed mailboxes **40',** assuming a fallback poll time of 6 hours, instead of just pushing them out another 6 hours, their nextPollTimes are uniformly distributed in a 5 hour window. A 5-hour window is chosen instead of 6 because all subscribed mailboxes **40'** were just polled in the first 15 minute interval and thus any subsequent polling for them is set out for at least another hour, although other durations could be used as noted above. As such,

$$\texttt{nextPollTime = Now + X + Y,}$$

where X = 60 minutes, which is added to nextPollTime so that it is not due for polling for at least another hour since it was just polled, as noted above, and Y = (srcMboxId mod 300) to make it due anytime in the 5 hours after that. Since the srcMboxIds are unique, a modulus of the srcMboxId by 300 will be truly uniform over the 5 hour period. Thus, after system start-up, once all the mailboxes (subscribed and unsubscribed) are polled once in the first 15 minutes, all the subscribed mailboxes **40'** will be evenly distributed over a 5 hour period so that they become due for their fallback polling at different times that are spread over 5 hours instead of all at once in the same 15 minute interval after 6 hours.

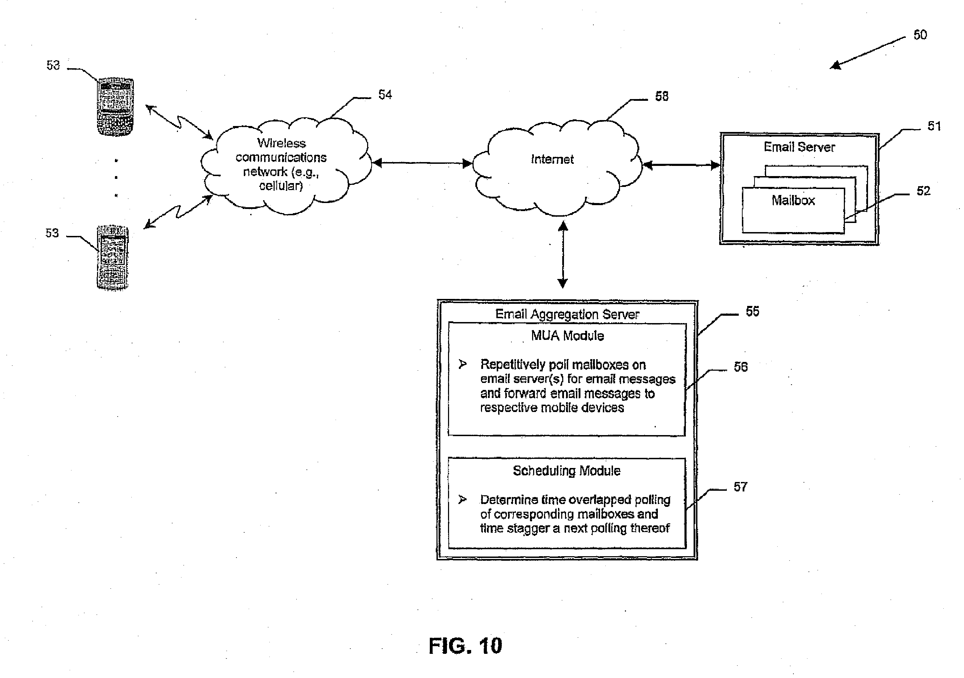

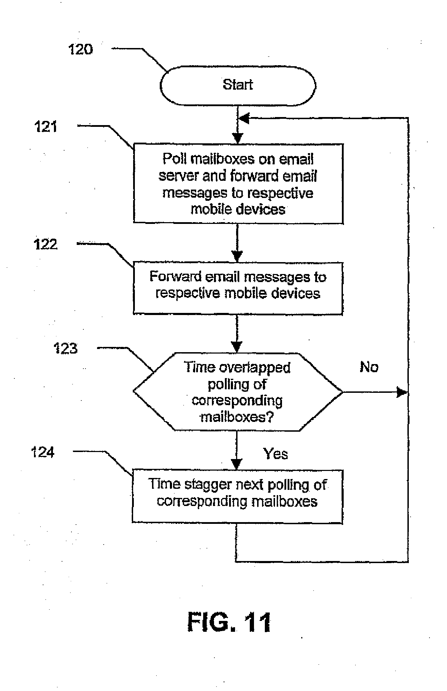

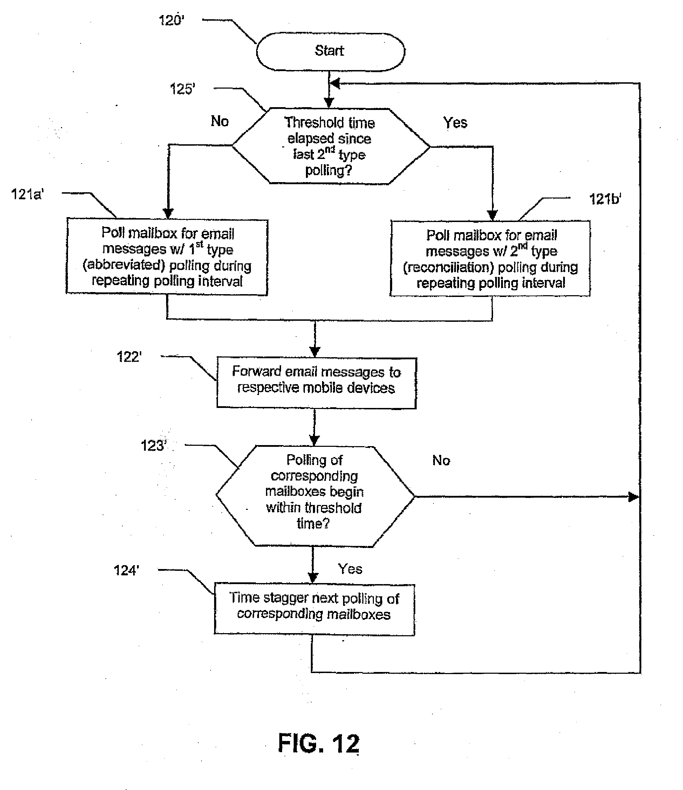

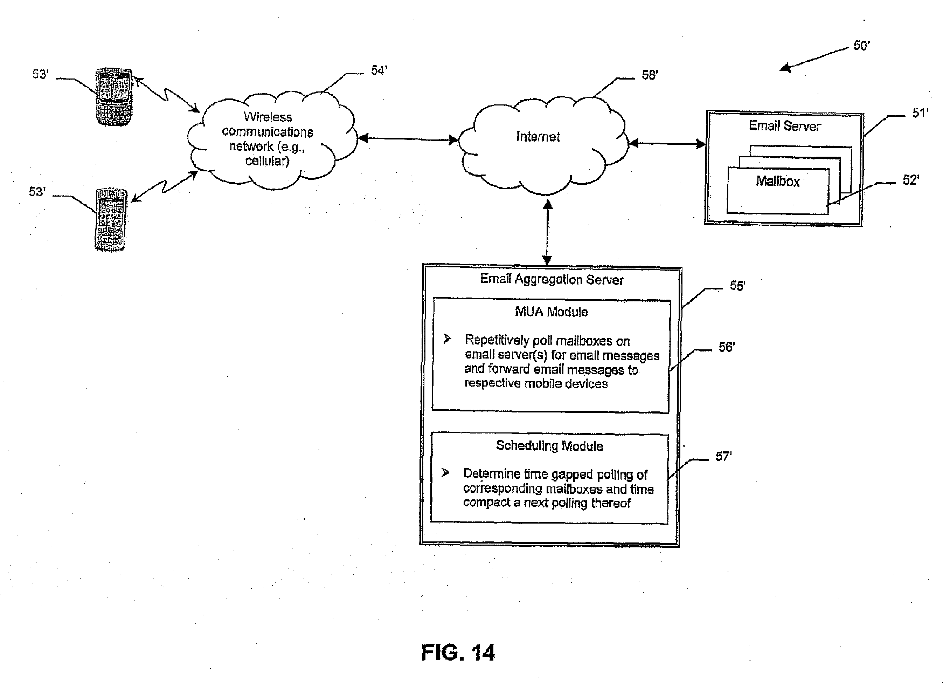

Turning now additionally to FIGS. 10-13, an embodiment in which the email aggregation server **55** advantageously determines time overlapped polling of corresponding mailboxes **52** and time staggers a next polling thereof is now described. It should be noted that in FIG. 10, similar elements to those shown in FIG. 1 are indicated by decades (e.g., the wireless communications devices **53** in FIG. 14 are similar to the wireless communications devices **33** in FIG. 1, etc.). In practice, it is possible for polls of mailboxes **52** to get "bunched up" together, resulting in bursty polling traffic to the MUA module **56**. Thus, the MUA module **56** may see little or no activity at times, and very heavy activity at other times causing under utilization and over utilization of its resources, respectively. As such, to alleviate the periods of over utilization, the email aggregation server **55** advantageously staggers overlapping polls so that when it is time to poll the same mailboxes again (e.g., during a next subinterval), the overlapped mailbox polls will be spread out.

The MUA module **56** polls mailboxes **52,** at Block **121,** as described above (e.g., using first and second polling types, at Blocks **125', 121a', 121b'**), and forwards retrieved emails to respective mobile devices **53,** at Block **122.** When it is determined that there is time overlapped polling of a plurality of corresponding mailboxes **52,** at Block **123,** the scheduling module **57** advantageously time staggers a next polling of the corresponding mailboxes, as noted above (Block **124**). By way of example, the scheduling module **57** may determine time overlapped polling based upon polling of corresponding mailboxes **52** beginning within a time overlap threshold, such as a predetermined number of seconds or milliseconds, for example (Block **123'**).

The foregoing will be further understood with reference to an exemplary implementation thereof. At system start-up, the scheduling module **57'** calculates the rate at which mailboxes **52** should be scheduled for polling to get through all the sources once in a 15 minute (i.e., 900000 millisecond) subinterval, and spreads polling of the mailboxes over a 15 minute period using this rate.

For example, if the total number of sources is 9000 then the scheduling module **57** has to schedule a mailbox **52** for polling once every 900000/9000, i.e., every 100 milliseconds to poll all of the mailboxes once in the 15 minute polling subinterval. Subsequently, the scheduling module **56** constantly attempts to distribute the mailbox pollings such that mailboxes **52** become due for polling at regular intervals. It does this by continuously calculating the rate as described above when there are additions or deletions of mailboxes, and then scheduling the next pollable mailbox **52** for polling 100ms after the last scheduled mailbox instead of scheduling it exactly 15 minutes out.

Stated alternately, the scheduling module **57** time staggers next pollings based upon the formula:

$$Tn(x) = Tc + I + x\Delta t \, ,$$

where Tn(x) is a next polling time for a given overlapped polling, Tc is a current time, I is the polling time interval, x is an integer number between 1 and a total number of overlapped pollings to be staggered, and At is a staggering interval.

In this way, the scheduling module **57** constantly attempts to uniformly distribute the mailbox pollings such that they come due at a relatively steady rate. On average, each mailbox **52** will continue to be polled once every 15 minutes. However, there will be instances where mailboxes **52** will be polled again at times that are greater or less than 15 minutes.

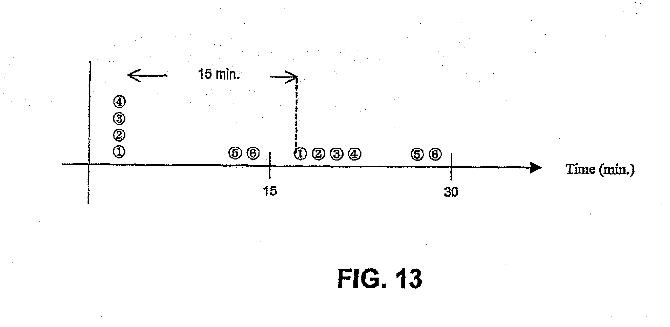

The timeline shown in FIG. 13 illustrates how the above-described approach helps in smoothing out mailbox polls as they tend to get bunched up due to additions of new mailboxes, deletions due to sources becoming non-pollable, and expediting mailbox pollings (e.g., based upon the discovery of new mail), for example. In the illustrated example, polling for mailboxes (1)-(4) are initially overlapped (i.e., during a first subinterval between 0 and 15 minutes), but in a next polling subinterval they have been staggered consecutively as shown. That is, when mailboxes (1)-(4) become due for polling at the same time, the scheduling module **57** staggers mailbox (1) to 15 minutes from current time Tc (or 100ms after the last mailbox for that matter), mailbox (2) to 100ms after mailbox (1), and so on. Without this optimization, mailboxes (1)-(4) would have been due for polling again at the same time after 15 minutes.

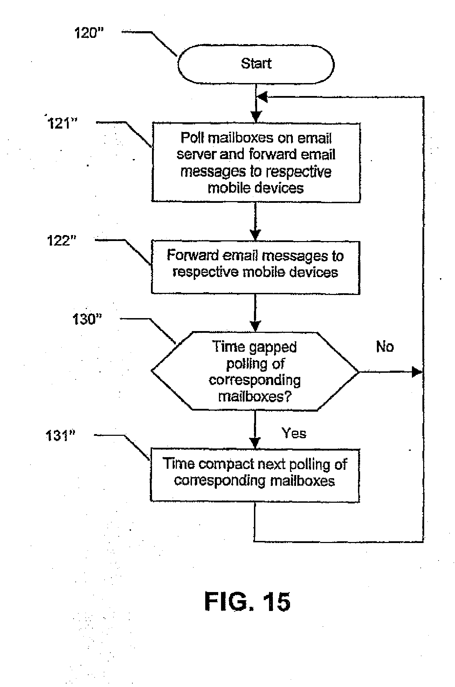

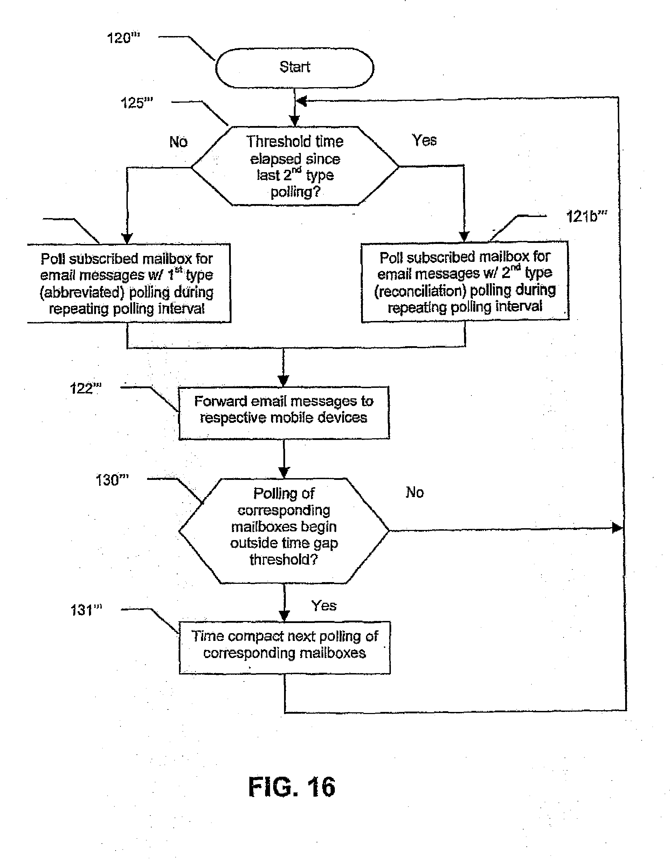

Referring now additionally to FIGS. 14-17, the email aggregation server **55'** may similarly determine time gapped polling of corresponding mailboxes **52'** defined by at least one time gap between successive polls, at Block **122"**, and time compact a subsequent polling of the corresponding mailboxes by removing the at least one time gap, at Block **131"**. More particularly, the scheduling module **57'** may determine time gapped polling based upon polling of corresponding mailboxes beginning outside of a time gap threshold. For example, using the above-described 100 millisecond intervals, a time gap may be determined based upon more than a 100 millisecond gap between scheduled polling operations, although other time gap thresholds may also be used.

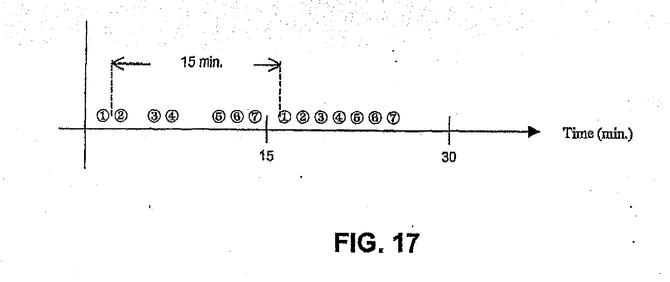

The foregoing will be further understood with reference to an exemplary case where there are periods with no mailboxes scheduled for polling, as illustrated in the first subinterval (i.e., from 0 to 15 minutes) of FIG. 17. The scheduling module will assign a nextPollTime such that these sources are due for polling 100ms apart. As a result, the nextPollTime for some of these sources will be less than 15 minutes from the last time they were polled. In the illustrated example, there are not any mailboxes scheduled between mailboxes (2) and (3) nor between mailbox (4) and (5), leading to periods of inactivity for the MUA module **56'**. In this case, by the time the scheduling module gets to mailbox (7), it will have organized the next poll times of mailboxes (1)-(6) such that they are due exactly 100 milliseconds apart after 15 minutes (i.e., during the second subinterval from 15 min. to 30 min.). Without this optimization, the periods of inactivity would continue to exist until such time as other mailboxes were added or otherwise expedited to occupy those slots.

It should be noted that one or more of the various polling and scheduling aspects described above may be used in a given email aggregation server/method. Moreover, depending upon the volume of mailboxes to be polled, the email aggregation server **35** may be one of multiple email aggregation servers (or divided into several partitions) cooperating to perform email aggregation for numerous users and mailboxes, as will be appreciated by those skilled in the art. Further details of a direct access email relay system in which the polling and scheduling operations described above may be implemented are provided in co-pending U.S. Patent Application No. 11/239,488 filed September 29, 2005, which is assigned to the present Assignee and is hereby incorporated herein in its entirety by reference.

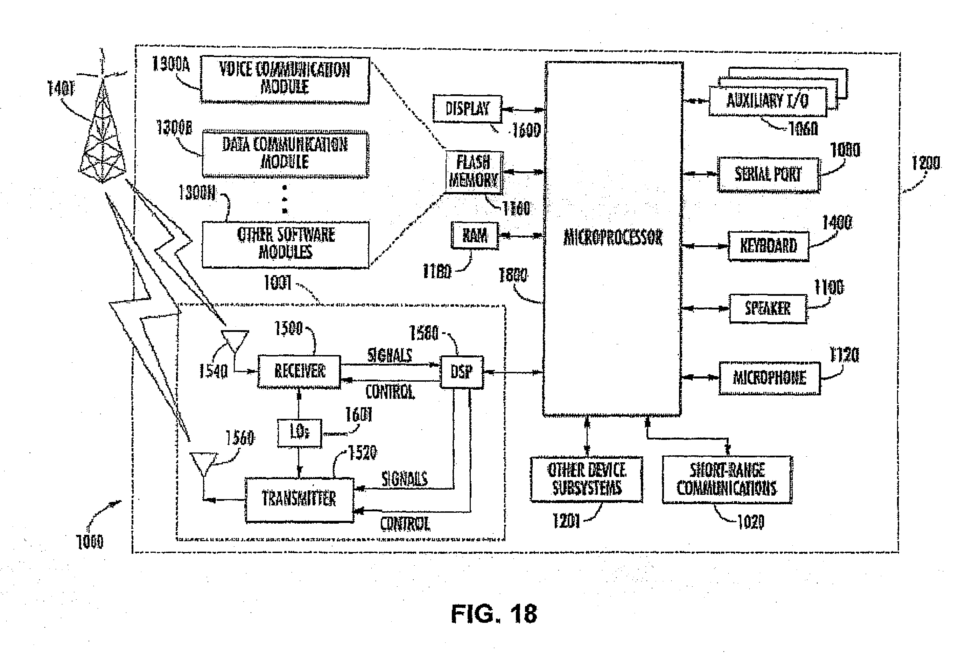

Exemplary components of a hand-held mobile wireless communications device **1000** that may be used in accordance the system **30** is further described in the example below with reference to FIG. 18. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 18. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic.gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the' data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices .

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

Further disclosures are given in the following clauses:

1. An electronic mail (mail) system comprising:

at least one subscribed email server having a plurality of subscribed mailboxes and sending a new mail indication upon receiving a new email message;

a plurality of mobile wireless communications devices; and

at least one email aggregation server for polling each subscribed mailbox for email messages based upon receiving a respective new email indication therefrom, and forwarding the email messages to respective mobile wireless communications devices;

said at least one email aggregation server performing a fallback polling of each subscribed mailbox based upon not having polled the subscribed mailbox for a threshold fallback time, and staggering respective initial fallback polling times of the subscribed mailboxes upon start-up.

2. The email system of clause 1 wherein said at least one email aggregation server performs an initial polling of each subscribed mailbox upon start-up.

3. The email system of clause 1 wherein said at least one email aggregation server staggers respective initial fallback polling times of the subscribed mailboxes upon start-up to have a uniform distribution.

4. The email system of clause 1 wherein said at least one email aggregation server staggers respective initial fallback polling times of distributed groups of the subscribed mailboxes upon start-up.

5. The email system of clause 1 wherein each subscribed mailbox has a unique identifier (UID) associated therewith; and wherein said at least one email aggregation server staggers respective initial fallback polling times of the subscribed mailboxes upon start-up based upon the UIDs.

6. The email system of clause 1 wherein said at least one email aggregation server performs a first type polling unless a threshold time has elapsed since a last second type polling, and wherein said second type polling is more comprehensive than said first type polling.

7. The email system of clause 6 wherein the first type polling comprises an abbreviated polling for new emails; and wherein the second type polling comprises a reconciliation polling of all emails.

8. The email system of clause 1 further comprising at least one unsubscribed email server not sending a new mail indication upon receiving a new email message; and wherein said at least one email aggregation server polls said at least one unsubscribed email server periodically.

9. The email system of clause 1 wherein the threshold fallback time has a duration in a range of 3 to 10 hours.

10. The email system of clause 1 wherein at least some of said mobile wireless communications devices comprise cellular communications devices.

11. An electronic mail (email) system comprising:

at least one subscribed email server having a plurality of subscribed mailboxes and sending a new mail indication upon receiving a new email message;

a plurality of mobile wireless communications devices; and

at least one email aggregation server for polling each subscribed mailbox for email messages based upon receiving a respective new email indication therefrom, and forwarding the email messages to respective mobile wireless communications devices;

said at least one email aggregation server performing a fallback polling of each subscribed mailbox based upon not having polled the subscribed mailbox for a threshold fallback time, and staggering respective initial fallback polling times of distributed groups of the subscribed mailboxes upon start-up to have a uniform distribution.

12. The email system of clause 11 wherein said at least one email aggregation server performs an initial polling of each subscribed mailbox upon start-up.

13. The emails system of clause 11 wherein each mailbox has a unique identifier (UID) associated therewith; and wherein said at least one email aggregation server staggers respective initial fallback polling times of the subscribed mailboxes upon start-up based upon the UIDs.

14. The email system of clause 11 wherein said at least one email aggregation server performs a first type polling unless a threshold time has elapsed since a last second type polling, and wherein said second type polling is more comprehensive than said first type polling.

15. An electronic mail (email) aggregation server for polling a plurality of subscribed mailboxes on at least one subscribed email server for email messages, the at least one subscribed email server sending a new mail indication upon receiving a new email message, the email aggregation server comprising:

an aggregation module for
polling each of a plurality of subscribed mailboxes for email messages based upon receiving a respective new email indication from the at least one email server,
forwarding the email messages to respective mobile wireless communications devices, and

performing a fallback polling of each subscribed mailbox based upon not having polled the subscribed mailbox for a threshold fallback time; and

a scheduling module for staggering respective initial fallback polling times of the subscribed mailboxes upon start-up.

16. The email aggregation server of clause 15 wherein said aggregation module performs an initial polling of each subscribed mailbox upon start-up.

17. The email aggregation server of clause 15 wherein said scheduling module staggers respective initial fallback polling times of the subscribed mailboxes upon start-up to have a uniform distribution.

18. The email aggregation server of clause 15 wherein said scheduling module staggers respective initial fallback polling times of distributed groups of the subscribed mailboxes upon start-up.

19. The email aggregation server of clause 15 wherein each mailbox has a unique identifier (UID) associated therewith; and wherein said scheduling module staggers respective initial fallback polling times of the subscribed mailboxes upon start-up based upon the UIDs.

20. The email aggregation server of clause 15 wherein said at least one email aggregation server performs a first type polling unless a threshold time has elapsed since a last second type polling, and wherein said second type polling is more comprehensive than said first type polling.

21. An electronic mail (email) aggregation method for aggregating email messages from a plurality of subscribed mailboxes on at least one subscribed mailbox server, the at least one subscribed mailbox server sending a new mail indication upon receiving a new email message, the method comprising:

polling each of a plurality of subscribed mailboxes for email messages based upon receiving a respective new email indication from the at least one email server;

forwarding the email messages to respective mobile wireless communications devices; and

performing a fallback polling of each subscribed mailbox based upon not having polled the subscribed mailbox for a threshold fallback time, and staggering respective initial fallback polling times of the subscribed mailboxes upon start-up.

22. The email method of clause 21 further comprising performing an initial polling of each subscribed mailbox upon start-up.

23. The email method of clause 21 wherein staggering comprises staggering respective initial fallback polling times of the subscribed mailboxes upon start-up to have a uniform distribution.

24. The email method of clause 21 wherein staggering comprises staggering respective initial fallback polling times of distributed groups of the subscribed mailboxes upon start-up.

25. The email method of clause 21 wherein each mailbox has a unique identifier (UID) associated therewith; and wherein staggering comprises staggering respective initial fallback polling times of the subscribed mailboxes upon start-up based upon the UIDs.

26. The email method of clause 21 wherein polling comprises performing a first type polling unless a threshold time has elapsed since a last second type polling, and wherein the second type polling is more comprehensive than the first type polling.

## Claims

1. An electronic mail, email, system comprising:

at least one subscribed email server (39") having a plurality of subscribed mailboxes (40") and being suitable for sending a new mail indication upon receiving a new email message; and

at least one email aggregation server (35") for polling each subscribed mailbox for email messages based upon receiving a respective new email indication therefrom, and forwarding the email messages to respective ones of a plurality of mobile wireless communications devices; **characterized by**

said at least one email aggregation server being suitable for performing a fallback polling of each subscribed mailbox based upon not having polled the subscribed mailbox for a threshold fallback time, and setting respective initial fallback polling times of the subscribed mailboxes upon start-up.

2. The email system of Claim 1 wherein said at least one email aggregation server is suitable for staggering respective initial fallback polling times of the subscribed mailboxes upon start-up.

3. The email system of Claim 1 wherein said at least one email aggregation server is suitable for performing an initial polling of each subscribed mailbox upon start-up.

4. The email system of Claim 1 wherein said at least one email aggregation server is suitable for staggering respective initial fallback polling times of the subscribed mailboxes upon start-up to have a uniform distribution.

5. The email system of Claim 1 wherein said at least one email aggregation server is suitable for staggering respective initial fallback polling times of distributed groups of the subscribed mailboxes upon start-up.

6. The email system of Claim 1 wherein each subscribed mailbox has a unique identifier, UID, associated therewith; and wherein said at least one email aggregation server being suitable for staggering respective initial fallback polling times of the subscribed mailboxes upon start-up based upon the UIDs.

7. The email system of Claim 1 wherein said at least one email aggregation server being suitable for performing a first type polling unless a threshold time has elapsed since a last second type polling, and wherein said second type polling is more comprehensive than said first type polling.

8. The email system of Claim 7 wherein the first type polling comprises an abbreviated polling for new emails; and wherein the second type polling comprises a reconciliation polling of all emails.

9. The email system of Claim 1 further comprising at least one unsubscribed email server is suitable for not sending a new mail indication upon receiving a new email message; and wherein said at least one email aggregation is suitable for server polling said at least one unsubscribed email server periodically.

10. An electronic mail, email, aggregation method at an email aggregation server (35") for aggregating email messages from a plurality of subscribed mailboxes (40") on at least one subscribed mailbox server (39"), the method comprising:

   polling each of a plurality of subscribed mailboxes for email messages (113) based upon receiving a respective new email indication
   forwarding the email messages to respective wireless communications devices (114); and **characterized by** performing a fallback polling of each subscribed mailbox (116) based upon not having polled the subscribed mailbox for a threshold fallback time (115), and setting respective initial fallback polling times of the subscribed mailboxes upon start-up (111).

11. The email method of Claim 10 wherein setting respective initial fallback polling times of the subscribed mailboxes upon start-up comprises staggering respective initial fallback polling times of the subscribed mailboxes upon start-up.

12. The email method of Claim 10 further comprising performing an initial polling of each subscribed mailbox upon start-up.

13. The email method of Claim 11 wherein staggering comprises staggering respective initial fallback polling times of the subscribed mailboxes upon start-up to have a uniform distribution.

14. The email method of Claim 11 wherein staggering comprises staggering respective initial fallback polling times of distributed groups of the subscribed mailboxes upon start-up.

15. The email method of Claim 11 wherein each mailbox has a unique identifier, UID, associated therewith; and wherein staggering comprises staggering respective initial fallback polling times of the subscribed mailboxes upon start-up based upon the UIDs.

FIG. 1

30

Email Server 31
Mailbox 32

Internet 38

Wireless communications network (e.g., cellular) 34

33 ... 33

Email Aggregation Server 35

MUA Module 36
➤ Poll unsubscribed mailboxes as scheduled and forward emails to mobile devices

Scheduling Module 37
➤ Divide repeating polling time intervals (PTI) into subintervals
➤ Schedule 1st type polling over each subinterval, and for 2nd type polling over each PTI
➤ Distribute 2nd type polling of mailboxes over each PTI

**FIG. 2**

**100**

Start

**101**
Divide each polling time interval into subintervals

**102**
Schedule each mailbox for 1st type polling over each subinterval

**103**
Schedule each mailbox for 2nd type polling over each polling time interval and distribute 2nd type polling of mailboxes over each polling time interval, where 2nd type polling is more comprehensive than 1st type

**104**
Poll mailboxes for email messages based upon scheduled first and second type pollings

**105**
Forward email messages to respective mobile devices

**106**
Finish

**FIG. 3**

**100'**

Start

**101'**
Divide each polling time interval into subintervals

**102'**
Schedule each mailbox for 1st type polling over each subinterval

**103'**
Schedule each mailbox for 2nd type polling over each polling time interval and uniformly distribute 2nd type polling of mailboxes over each polling time interval based upon mailbox UIDs (e.g., modulus of UIDs by total number of subintervals in polling time interval), where 1st type polling = abbreviated polling and 2nd type polling = reconciliation polling of all emails)

**104'**
Poll mailboxes for email messages based upon scheduled first and second type pollings

**105'**
Forward email messages to respective mobile devices

**106'**
Finish

**FIG. 4**

FIG. 5

FIG. 6

**Subscribed email server(s)** — 39

**Subscribed Mailbox** — 40"

**33"**

**34"** Wireless communications network (e.g., cellular)

**38"** Internet

**35"** Email Aggregation Server

**MUA Module** — 36"
- Poll each subscribed mailbox based upon receiving respective new email indication from email server(s)
- Forward email messages to mobile devices
- Perform fallback polling of each subscribed mailbox based upon not having polled subscribed mailbox for threshold fallback time

**Scheduling Module** — 37"
- Stagger respective initial fallback polling times of subscribed mailboxes upon start-up and schedule fallback polling of each subscribed mailbox

EP 2 242 221 A1

FIG. 7

FIG. 8

EP 2 242 221 A1

Threshold Fallback
Time (6 hours)

Time (hours)

0    1    2    3    4    5    6    7

**FIG. 9**

**FIG. 10**

120 — Start

121 — Poll mailboxes on email server and forward email messages to respective mobile devices

122 — Forward email messages to respective mobile devices

123 — Time overlapped polling of corresponding mailboxes?    No

124 — Time stagger next polling of corresponding mailboxes    Yes

FIG. 11

120'

Start

125'

No     Threshold time elapsed since last 2$^{nd}$ type polling?     Yes

121a'

Poll mailbox for email messages w/ 1$^{st}$ type (abbreviated) polling during repeating polling interval

121b'

Poll mailbox for email messages w/ 2$^{nd}$ type (reconciliation) polling during repeating polling interval

122'

Forward email messages to respective mobile devices

123'

Polling of corresponding mailboxes begin within threshold time?     No

124'     Yes

Time stagger next polling of corresponding mailboxes

FIG. 12

**FIG. 13**

**FIG. 14**

120" ⟶ ( Start )

121" ── Poll mailboxes on email
server and forward email
messages to respective
mobile devices

122" ── Forward email messages to
respective mobile devices

130" ── Time gapped
polling of
corresponding
mailboxes?  ──No──▶

Yes

131" ── Time compact next polling of
corresponding mailboxes

## FIG. 15

120'" — Start

125'" — Threshold time elapsed since last 2<sup>nd</sup> type polling?

No — Poll subscribed mailbox for email messages w/ 1<sup>st</sup> type (abbreviated) polling during repeating polling interval

Yes — Poll subscribed mailbox for email messages w/ 2<sup>nd</sup> type (reconciliation) polling during repeating polling interval — 121b'"

122'" — Forward email messages to respective mobile devices

130'" — Polling of corresponding mailboxes begin outside time gap threshold?

No

131'" — Yes — Time compact next polling of corresponding mailboxes

# FIG. 16

15 min.

①② ③④ ⑤⑥⑦ ①②③④⑤⑥⑦ Time (min.)

15 30

**FIG. 17**

**FIG. 18**

EP 2 242 221 A1

**EUROPEAN SEARCH REPORT**

Application Number

EP 10 17 0938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/072589 A1 (CLARKE DAVID J [US]) 29 March 2007 (2007-03-29) * paragraph [0015] - paragraph [0072]; figure 1 * ----- | 1-15 | INV. H04L12/58 |
| A | WARD FOSTER ET AL: "Method for reducing polling traffic within a mailbox communication system" RESEARCH DISCLOSURE, MASON PUBLICATIONS, HAMPSHIRE, GB, vol. 468, no. 64, April 2003 (2003-04), pages 1-3, XP007132506 ISSN: 0374-4353 * the whole document * ----- | 1-15 | |
| A | EP 1 557 987 A (RES IN MOTION LTD [CA]) 27 July 2005 (2005-07-27) * paragraph [0006] - paragraph [0030]; figures 1-4 * ----- | 1-15 | |

TECHNICAL FIELDS SEARCHED (IPC)

H04L
H04Q
G06Q

The present search report has been drawn up for all claims

| Place of search | Date of completion of the search | Examiner |
|---|---|---|
| Munich | 7 September 2010 | García Bolós, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 17 0938

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2010

| Patent document cited in search report | | Publication date | Patent family member(s) | | Publication date |
|---|---|---|---|---|---|
| US 2007072589 | A1 | 29-03-2007 | US | 2007142034 A1 | 21-06-2007 |
| EP 1557987 | A | 27-07-2005 | AT | 325490 T | 15-06-2006 |
| | | | AU | 2005200271 A1 | 11-08-2005 |
| | | | BR | PI0500283 A | 20-09-2005 |
| | | | CA | 2493422 A1 | 22-07-2005 |
| | | | CN | 1645816 A | 27-07-2005 |
| | | | DE | 602004000808 T2 | 02-11-2006 |
| | | | HK | 1078706 A1 | 14-07-2006 |
| | | | JP | 2005244951 A | 08-09-2005 |
| | | | JP | 2007037180 A | 08-02-2007 |
| | | | JP | 2008072769 A | 27-03-2008 |
| | | | KR | 20050076777 A | 27-07-2005 |
| | | | MX | PA05000901 A | 16-08-2005 |
| | | | SG | 113605 A1 | 29-08-2005 |
| | | | TW | 280065 B | 21-04-2007 |
| | | | US | 2007130273 A1 | 07-06-2007 |
| | | | US | 2005164703 A1 | 28-07-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060293032 A, Clarke
- US 23948805 A